# EUROPÄISCHE PATENTSCHRIFT

(11) **EP 0 604 361 B1**
(45) Veröffentlichungstag und Bekanntmachung des Hinweises auf die Patenterteilung: **07.02.1996**
(21) Anmeldenummer: 93810845.3
(22) Anmeldetag: 01.12.1993
(51) Int. Cl.: F16B 37/04

(54) **Befestigungsvorrichtung**
Fastening element
Dispositif de fixation

(30) Priorität: 19.12.1992 DE 4243185
(43) Veröffentlichungstag der Anmeldung: 29.06.1994
(73) Patentinhaber: HILTI Aktiengesellschaft, FL-9494 Schaan (LI)
(72) Erfinder: Hoefle, Siegfried, A-6840 Götzis (AT)
(74) Vertreter: Wildi, Roland

(56) Entgegenhaltungen:
- FR-A- 2 636 687
- US-A- 3 483 910
- US-A- 4 410 298
- US-A- 4 666 355
- US-A- 5 209 619

## Beschreibung

Die Erfindung betrifft eine Befestigungsvorrichtung mit einem Grundkörper, einem Zwischenkörper und einem Gegenstück, wobei der Grundkörper ein Gewinde, einen unrunden Kopf sowie wenigstens eine erste Drehsicherungsfläche aufweist und der Zwischenkörper mit wenigstens einer Durchgangsbohrung sowie mit wenigstens einer zweiten Drehsicherungsfläche zur drehschlüssigen Verbindung mit der ersten Drehsicherungsfläche versehen ist.

Aus der CH-PS 597 450 ist ein Montagesystem bekannt, das ein Gegenstück in Form einer Befestigungsschiene aufweist, die aus einem Hohlprofil mit rechteckigem Querschnitt besteht und wenigstens eine in Längsrichtung verlaufende Ausnehmung in Form einer schlitzartigen Oeffnung zum Einsetzen einer oder mehrerer Befestigungsvorrichtungen besitzt. Die schlitzartige Oeffnung wird in der Breite von den freien Enden zweier Schenkel begrenzt.

Die Befestigungsschiene weist der axialen Festlegung der Befestigungsvorrichtung dienende Verriegelungsnuten auf. Die Befestigungsvorrichtung setzt sich aus einem Grundkörper mit einem unrunden Kopf, einem Zwischenkörper und einem Befestigungselement zusammen, wobei das Befestigungselement in der Lage ist, den Grundkörper und den Zwischenkörper gegeneinander zu verspannen. Für die Festlegung einer derartigen Befestigungsvorrichtung an einer Befestigungsschiene, die sich beispielsweise an einer Decke befindet und mit der schlitzartigen Oeffnung nach unten zeigt, wird der Grundkörper der Befestigungsvorrichtung in die schlitzartige Oeffnung gesteckt und um 90° verdreht, so dass der unrunde Kopf im Innern der Befestigungsschiene, an der Innenseite der beiden Schenkel zur Anlage gelangt.

Eine weitere Befestigungsvorrichtung ist aus der US-A 4 666 355 bekannt. Diese bekannte Befestigungsvorrichtung setzt sich aus einem Grundkörper, einem Zwischenkörper und einem Federelement zusammen, wobei zwei Fahnen des Federelementes Schlitze des Zwischen-körpers durchgreifen und am Grundkörper befestigt sind. Zum Befestigen dieser bekannten Befestigungsvorrichtung an einer C-förmigen Befestigungsschiene wird der Grundkörper durch eine schlitzartige Öffnung in das Innere der Befestigungsschiene gesteckt und um 90° verdreht, so dass der unrunde Kopf an der Innenseite von in das Innere der Befestigungsschiene ragenden Schenkeln zur Anlage gelangt. Die Schlitze des im Mündungsbereich auf der Aussenseite der Befestigungsschiene aufliegenden, elastischen Zwischenkörpers ermöglichen ein Verdrehen des Grundkörpers gegenüber dem Zwischenkörper um 90°.

Beide bekannten Lösungen zeigen somit auf, dass die Befestigungsvorrichtungen nur durch das Verdrehen des Grundkörpers unverlierbar an der Befestigungsschiene festlegbar sind. Bei der Befestigung der bekannten Befestigungsvorrichtungen muss der Grundkörper wenigstens teilweise verdreht werden, so dass der unrunde Kopf des Grundkörpers an der Innenseite der Schenkel zur Anlage gelangt.

Je nach Anwendungsfall ist es notwendig, die Befestigungsvorrichtung durch Verschieben gegenüber dem beispielsweise als Befestigungsschiene ausgebildeten Gegenstück auszurichten. Die bekannten Befestigungsvorrichtungen können nach dem endgültigen Festziehen gegenüber der Befestigungsschiene nicht mehr verschoben werden, da ein Teil des Grundkörpers in Verriegelungsnuten der Befestigungsschiene ragt.

Der Erfindung liegt die Aufgabe zugrunde, eine Befestigungsvorrichtung derart auszubilden, dass die Befestigungsvorrichtung in die Ausnehmung eines Gegenstückes derart einsetzbar ist, dass sie gegen Herausfallen schon gesichert ist, bevor ein Verdrehen des Grundkörpers erfolgt ist.

Erfindungsgemäss wird dies dadurch erreicht, dass das Gegenstück eine unrunde, den Durchtritt des Kopfes vom Grundkörper in einer bestimmten Winkelstellung erlaubende Ausnehmung aufweist und dass am Grundkörper ein rechtwinklig zur Gewindeachse einfederbares Federelement zum Einschnappen in das Gegenstück angeordnet ist, das mit seiner radial entspannten Aussenkontur die Projektion der Ausnehmung wenigstens bereichsweise überragt und auch die drehschlüssige Verbindung herstellt.

Durch die Verwendung eines derartigen radial einfederbaren Federelementes ist es möglich, die Befestigungsvorrichtung in der Ausnehmung eines Gegenstückes im Sinne einer provisorischen Halterung festzulegen, ohne dass eine Verdrehung des Grundkörpers erfolgen muss.

Vorteilhafterweise ist das Federelement zumindest teilweise zwischen dem Kopf des Grundkörpers und dem Zwischenkörper angeordnet. Eine derartige konstruktive Ausgestaltung der Befestigungsvorrichtung ermöglicht die Festlegung der Befestigungsvorrichtung am Gegenstück; ohne dass der unrunde Kopf das Gegenstück hintergreift.

Um eine axiale Vorspannung der kompletten Befestigungsvorrichtung in der festgelegten Position erreichen zu können, ist es vorteilhaft, wenn das Federelement parallel zur Gewindeachse federbar ist.

Damit der Grundkörper auch mit Hilfe des Zwischenkörpers in Umfangsrichtung verdreht werden kann, ist der Grundkörper drehfest mit dem Zwischenkörper verbunden. Die drehfeste Verbindung erfolgt mit Hilfe des Federelementes.

Zweckmässigerweise weist daher das Federelement mit den Drehsicherungsflächen von Grundkörper und Zwischenkörper zusammenwirkende Gegenflächen auf. Die an dem Federelement angeordneten Gegenflächen sind zweckmässigerweise von Stiften und die Drehsicherungsflächen von Durchtrittsöffnungen gebildet. Die Durchmesser der Durchtrittsöffnungen sind geringfügig kleiner ausgebildet als die Durchmesser der Stifte. Die Stifte lassen sich so in die Durchtrittsöffnungen einpressen, so dass der Grundkörper über das Federelement mit dem Zwischenkörper axial fest und drehfest verbunden ist.

Vorzugsweise ist das Gegenstück als Befestigungsschiene ausgebildet, die aus einem im wesentlichen rechteckigen, C-förmigen Hohlprofil mit einer Ausnehmung in Form einer schlitzartigen Oeffnung besteht. Die Breite der Oeffnung wird begrenzt von zwei zueinander parallel verlaufenden, in das Innere des Hohlprofiles ragenden Schenkeln. Die Befestigungsvorrichtung kann mit Hilfe des Federelementes schnappartig am Gegenstück angeordnet werden. In dieser vormontierten Position kann die Befestigungsvorrichtung gegenüber dem Gegenstück verschoben werden.

Zur Festlegung der Befestigungsvorrichtung an einer bestimmten Stelle der Befestigungsschiene ist der Grundkörper lediglich in Umfangsrichtung um 90° zu verdrehen, so dass der unrunde Kopf beim Zusammenziehen des Grundkörpers und des Zwischenkörpers mit Hilfe eines Befestigungselementes zum Gegenstück gezogen werden kann und mit diesem fest zusammenwirkt.

Derartige Befestigungsvorrichtungen eignen sich insbesondere für die Montage von Rohrleitungen, wobei die Rohrleitungen über entsprechende Rohrschellen über Befestigungselemente in Form von Gewindestangen mit der Befestigungsvorrichtung in Verbindung stehen. Zur Festlegung derartiger Gewindestangen an der Befestigungsvorrichtung sind diese lediglich durch die Durchgangsbohrung im zentralen Bereich des Zwischenkörpers hindurchzustecken und in das Innengewinde des Grundkörpers einzudrehen. Durch das Anziehen einer auf der Gewindestange angeordneten Kontermutter können der Grundkörper und der Zwischenkörper zusammengezogen werden.

Zweckmässigerweise ist das Gegenstück ein Bauteil mit einer unrunden Ausnehmung, in der die Befestigungsvorrichtung schnappartig vormontiert werden kann. Das mit einer Befestigungsvorrichtung bestückte Gegenstück kann somit mit einer Hand als Montageeinheit, beispielsweise einer Befestigungsschiene, zugeführt werden. Befindet sich das Gegenstück zusammen mit der Befestigungsvorrichtung an der richtigen Stelle der Befestigungsschiene, so kann der Zwischenkörper der Befestigungsvorrichtung mit einer Hand in Umfangsrichtung um 90° verdreht werden, so dass der Grundkörper Schenkel der Befestigungsschiene hintergreift.

Um eine Sicherung gegen unerwünschtes Verdrehen des Gegenstücks gegenüber der Befestigungsvorrichtung zu erreichen, weist der Zwischenkörper vorteilhafterweise wenigstens einen als Drehsicherung für das Gegenstück dienenden Vorsprung auf, der mit der Ausnehmung des Gegenstückes in Verbindung bringbar ist.

Die Erfindung wird nachfolgend anhand von Zeichnungen, die zwei Ausführungsbeispiele darstellen, näher erläutert. Es zeigen:
- Fig. 1: eine Befestigungsvorrichtung, in Form einer Explosionszeichnung;
- Fig. 2: die Befestigungsvorrichtung gemäss Fig. 1, in Verbindung mit einem Gegenstück;
- Fig. 3: eine weitere Befestigungsvorrichtung, in Form einer Explosionszeichnung;
- Fig. 4: die Befestigungsvorrichtung gemäss Fig. 3 in Verbindung mit einem Gegenstück, in Form eines Bauteiles.

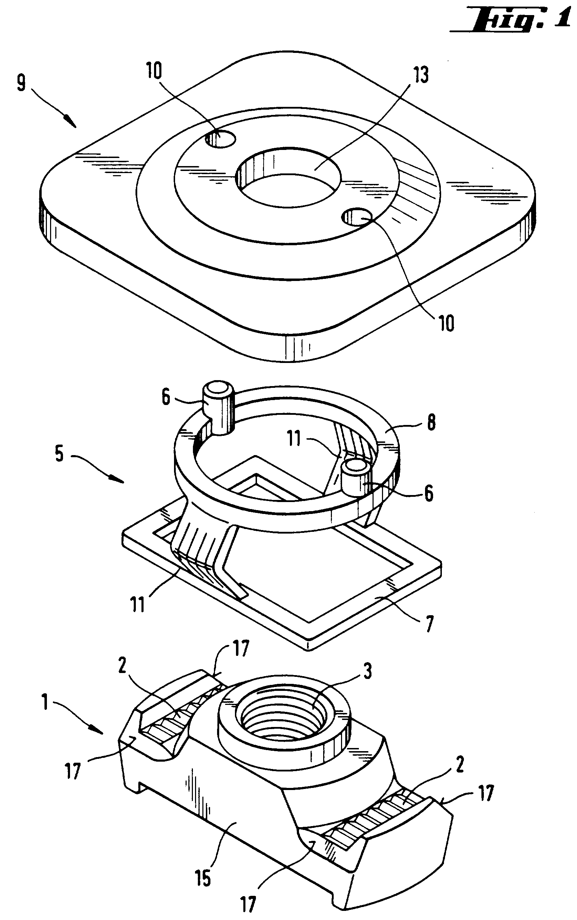

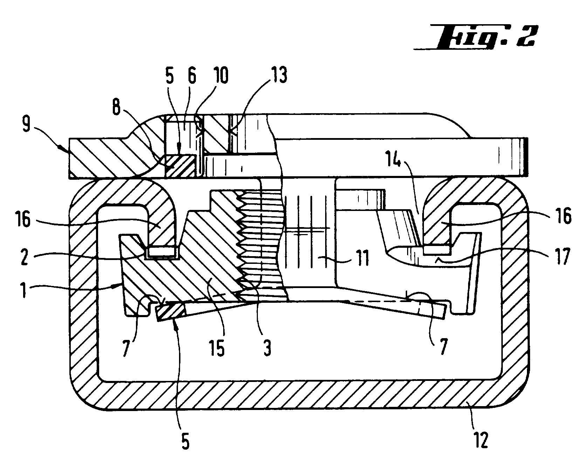

Die Fig. 1 und 2 zeigen eine Befestigungsvorrichtung, die sich aus einem Grundkörper 1, einem Zwischenkörper 9 und einem Federelement 5 zusammensetzt, wobei das Federelement 5 zwischen dem Grundkörper 1 und dem Zwischenkörper 9 angeordnet ist.

Der Grundkörper 1 der Befestigungsvorrichtung weist einen hammerartigen, unrunden Kopf 15, ein Gewinde 3 in Form eines Innengewindes und zwei parallel zueinander verlaufende Zahnprofile 2 auf. Der Zwischenkörper 9 besitzt eine zentral angeordnete Durchgangsbohrung 13, deren Durchmesser grösser ist, als der Aussendurchmesser des am Grundkörper 1 angeordneten Innengewindes. Weiters besitzt der Zwischenkörper 9 zwei einander diametral gegenüberliegende Drehsicherungsflächen 10 in Form von Durchtrittsöffnungen.

Das Federelement 5 besitzt die Eigenschaft, sowohl in radialer Richtung als auch in axialer Richtung federbar zu wirken. Am Federelement 5 sind Gegenflächen 6 in Form von Stiften angeordnet, die sich auf einem Anschlagring 8 ebenfalls diametral gegenüberliegen und derart von diesem abragen, dass sie mit den als Gegenflächen 10 wirkenden Durchtrittsöffnungen des Zwischenkörpers 9 zusammenwirken können. Der Durchmesser dieser Stifte ist geringfügig grösser ausgebildet, als der Durchmesser dieser Durchtrittsöffnungen. Der Anschlagring 8 liegt an dem Zwischenkörper 9 an.

Diese Befestigungsvorrichtung dient der Festlegung von beispielsweise Rohrleitungen an einem Gegenstück 12 in Form einer im wesentlichen C-förmig ausgebildeten Befestigungsschiene, die aus einem Hohlprofil mit rechteckigem Querschnitt besteht, das eine in Längsrichtung verlaufende Ausnehmung 14 in Form einer schlitzartige Oeffnung aufweist, die dem Einsetzen der Befestigungsvorrichtung dient. Die Breite der schlitzartigen Oeffnung ist durch zwei Schenkel 16 begrenzt, die mit ihren freien Enden parallel zueinander in das Hohlprofil hinein abgebogen sind. Die Enden der Schenkel 16 weisen zu jener Seite des Hohlprofils, die der schlitzartigen Oeffnung gegenüberliegt. Die freien Enden der Schenkel 16 sind mit einem Zahnprofil versehen. Ein komplementär dazu ausgebildetes Zahnprofil 2 ist an dem unrunden Kopf 15 des Grundkörpers 1 angeordnet und zwar auf jener Seite, die mit den freien Enden der Schenkel 16 zusammenwirkt.

Der axial elastischen Festlegung des Grundkörpers 1 an dem Zwischenkörper 9 dient eine elastische Gegenfläche 7 des Federelementes 5. Die Gegenfläche 7 ist über im wesentlichen radial einfederbare Verbindungsstege 11 mit dem Anschlagring 8 verbunden. Die Aussenkontur dieser Verbindungsstege 11 im unbelasteten Zustand ist etwas grösser, als die Projektion der Ausnehmung 14 bzw die Breite zwischen beiden Schenkeln 16 der Befestigungsschiene. Beim Einsetzen einer Befestigungsvorrichtung in die Befestigungsschiene erfolgt eine schnappartige Festlegung der Befestigungsvorrichtung durch die federnde Bewegung des Verbindungssteges 11.

Die Fig. 2 zeigt, wie der Zwischenkörper 9 auf der Aussenseite der Befestigungsschiene aufliegt und das Zahnprofil 2 des Grundkörpers 1 in dem Zahnprofil der Befestigungsschiene im Eingriff ist. Die elastische Gegenfläche 7 des Federelementes 5, die am Grundkörper 1 anliegt, befindet sich in einem vorgespannten Zustand.

Wird die Befestigungsvorrichtung in die schlitzartige Oeffnung der Befestigungsschiene hineingesteckt und um 90° verdreht, so gelangen die am Grundkörper 1 angeordneten Einführschrägen 17 mit den in das Innere des Hohlprofils ragenden Schenkeln 16 in Berührung. Ueber die Einführschrägen 17 werden der Grundkörper 1 und der Zwischenkörper 9 axial auseinanderbewegt. Dadurch erfährt das Federelement 5 eine Vorspannung. Wird jene Position des Grundkörpers 1 erreicht, in der das Zahnprofil 2 des Grundkörpers 1 in das Zahnprofil der Befestigungsschiene greift, so erfolgt eine axiale Versetzung des Grundkörpers in die entgegengesetzte Richtung zu den Schenkeln 16 hin um wenigstens den Betrag der Zahnhöhe des Zahnprofils 2. In dieser Lage ist das Federelement 5 noch immer axial vorgespannt.

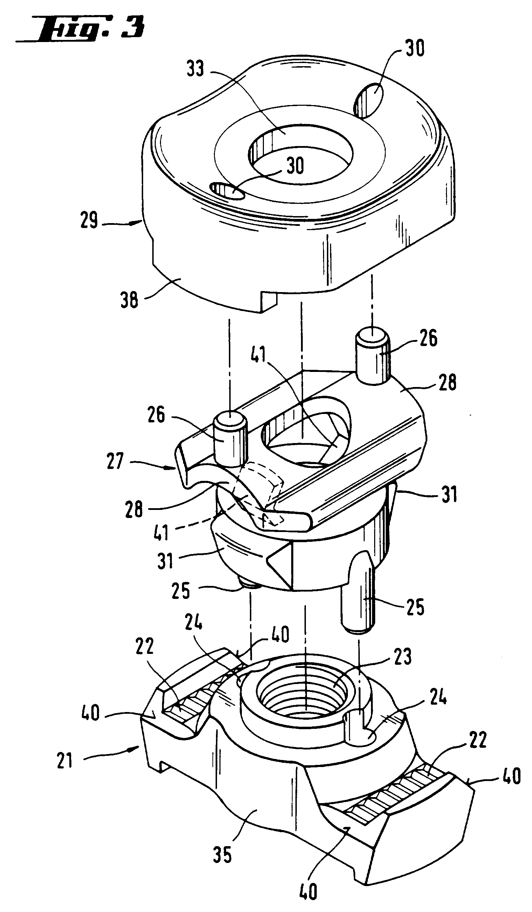

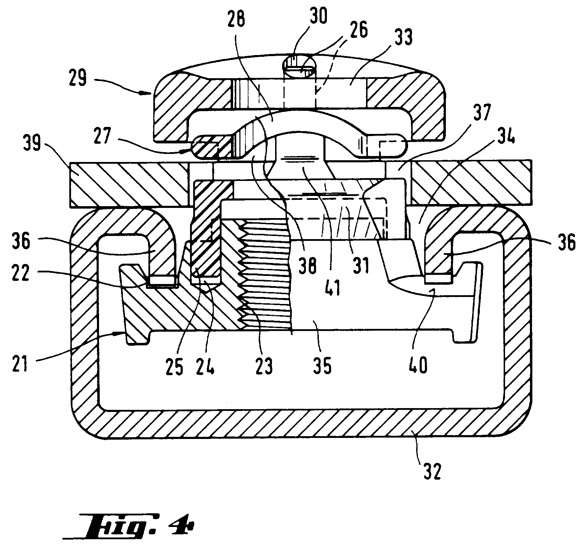

Die in Fig. 3 und 4 dargestellte Befestigungsvorrichtung besteht aus einem Grundkörper 21, einem Zwischenkörper 29 und einem Federelement 27, wobei das Federelement 27 ebenfalls zwischen dem Grundkörper 21 und dem Zwischenkörper 29 angeordnet ist.

Die Befestigungsvorrichtung steht in Verbindung mit einem Gegenstück 39 in Form eines Bauteiles und einer C-förmigen Befestigungsschiene 32, die aus einem Hohlprofil mit rechteckigem Querschnitt besteht, welches eine in Längsrichtung verlaufende schlitzartige Oeffnung 34 aufweist, die dem Einsetzen der Befestigungsvorrichtung dient. Die Breite der schlitzartigen Oeffnung 34 ist durch zwei Schenkel 36 begrenzt, die mit ihren freien Enden parallel zueinander in das Hohlprofil hinein abgebogen sind. Die Enden der Schenkel 36 weisen zu jener Seite des Hohlprofils, die der schlitzartigen Oeffnung gegenüberliegt.

Die freien Enden der Schenkel 36 sind mit einem Zahnprofil versehen. Dieses Zahnprofil kann mit einem komplementären Zahnprofil 22 zusammenwirken, welches am Grundkörper 21 zu beiden Seiten eines unrunden Kopfes 35 angeordnet ist.

Der Grundkörper 21 besitzt weiters ein Gewinde 23 und zwei einander diametral gegenüberliegend angeordnete Drehsicherungsflächen 24 in Form von Durchtrittsöffnungen.

Der Zwischenkörper 29 ist mit einer im zentralen Bereich angeordneten Durchgangsbohrung 33 versehen, deren Durchmesser grösser ist, als der Aussendurchmesser des am Grundkörper 21 angeordneten Gewindes 23 in Form eines Innengewindes. Am Zwischenkörper 29 sind ebenfalls zwei einander diametral gegenüberliegende Drehsicherungsflächen 30 in Form von Durchtrittsöffnungen angeordnet. Vom Zwischenkörper 29 ragen zwei einander diametral gegenüberliegende, leistenförmig ausgebildete Vorsprünge 38 ab, die eine Drehsicherung für das Gegenstück 39 bilden, welches mit Hilfe der Befestigungsvorrichtung an der Befestigungsschiene 32 festlegbar ist.

Das Federelement 27 weist eine zentrale Durchgangsbohrung auf, deren Durchmesser grösser ausgebildet ist, als der Gewindeaussendurchmesser des am Grundkörper 21 angeordneten Innengewindes 23. Insgesamt besitzt das Federelement 27 weiters vier Gegenflächen 25, 26 in Form von Stiften, die sich jeweils paarweise einander diametral gegenüberliegen, paarweise zueinander um 90° versetzt angeordnet sind und sich paarweise in einander entgegengesetzte Richtungen erstrecken. Der Durchmesser dieser Stifte ist geringfügig grösser als der Durchmesser der Durchtrittsöffnungen am Grundkörper 21 und am Zwischenkörper 29. Die mit dem Zwischenkörper 29 zusammenwirkenden Stifte befinden sich auf einem axial elastischen Bereich 28 des Federelementes 27. Zwischen beiden paarweise angeordneten Stiften besitzt das Federelement 27 einen radial einfederbaren Bereich 31, dessen Aussenkontur bzw. Aussendurchmesser grösser ausgebildet ist, als die Breite der schlitzartigen Oeffnung 34 der Befestigungsschiene 32. Der radial einfederbare Bereich 31 erstreckt sich im wesentlichen bereichsweise um das Federelement 27.

Die in Fig. 4 dargestellte Befestigungsvorrichtung verbindet das Gegenstück 39 mit einer Befestigungsschiene 32. Damit dies möglich ist, muss auch das Gegenstück 39 eine Ausnehmung 37 aufweisen, durch die der unrunde Kopf 35 des Grundkörpers 21 sowie ein Teil des Federelementes 27 durchsteckbar ist und die der Aufnahme der Drehsicherung in Form leistenartiger Vorsprünge 36 des Zwischenkörpers 29 dient.

Beim Festlegen einer Befestigungsvorrichtung an einer Befestigungsschiene 32 wird zuerst die Befestigungsvorrichtung teilweise durch die Ausnehmung 37 des Gegenstückes 39 hindurchgesteckt, so dass eine schnappartige Verbindung beider Teile erfolgt. Das Gegenstück 39 kann anschliessend zusammen mit der Befestigungsvorrichtung der Befestigungsschiene 32 zugeführt werden. Zu diesem Zweck wird der Grundkörper 21 gegenüber der schlitzartigen Öffnung 34 derart ausgerichtet, dass der Grundkörper 21 in die schlitzartige Öffnung 34 einsteckbar ist.

Die am Zwischenkörper 29 angeordneten Vorsprünge 38 sind leistenartig ausgebildet und liegen auf der Oberfläche des Gegenstückes 39 auf. Der radial einfederbare Bereich 31 des Federelementes 27 liegt im wesentlichen an jener Seite des Gegenstückes 39 an, die auf der Befestigungsschiene 32 aufliegt. Der Zwischenkörper 29 und der Grundkörper 21 sind über das Federelement 27 drehfest miteinander verbunden. Für die Festlegung der Befestigungsvorrichtung an der Befestigungsschiene 32 erfolgt eine Verdrehung des Grundkörpers 21 über den Zwischenkörper 29 um 90°, so dass am unrunden Kopf 35 angeordnete Einführschrägen 40 in Kontakt mit den Schenkeln 36 der Befestigungsschiene 32 kommen.

Über die Einführschrägen 40 erfolgt eine axiale Versetzung des Grundkörpers 21 gegenüber dem Zwischenkörper 29, so dass der in axiale Richtung elastische Teil des Federelementes 27 vorgespannt wird. Durch das Verdrehen der gesamten Befestigungsvorrichtung gelangt der radial einfederbare Bereich 31 zur grössten Erstreckung der Ausnehmung 37 des Gegenstückes 39. Auf diese Weise ist das Federelement 27 im Bereich der Ausnehmung 37 frei beweglich.

Beim Verspannen der Befestigungsvorrichtung zusammen mit dem Bauteil 39 an der Befestigungsschiene 32 wird ein nicht dargestelltes Befestigungselement in Form einer Schraube durch die zentrale Durchtrittsöffnung 33 am Zwischenkörper 29 und im Federelement 27 dem Innengewinde 23 des Grundkörpers 21 zugeführt. Beim Festziehen der Schraube erfolgt ein axiales Zusammenziehen aller Teile, wobei insbesondere der axial elastische Bereich 28 des Federelementes 27 zusammengedrückt wird und die leistenartigen Vorsprünge 36 des Zwischenkörpers 29 in die Ausnehmung 37 des Gegenstückes 39 eingreifen. Dabei werden die Verbindungsstege 41, die sich zwischen dem axial elastischen Bereich 28 und dem radial einfederbaren Bereich 31 des Federelementes 27 befinden, in axialer Richtung verformt.

## Patentansprüche

1. Befestigungsvorrichtung mit einem Grundkörper (1, 21), einem Zwischenkörper (9, 29) und einem Gegenstück (12, 32), wobei der Grundkörper (1, 21) ein Gewinde (3, 23), einen unrunden Kopf (15, 35) sowie wenigstens eine erste Drehsicherungsfläche (24) aufweist und der Zwischenkörper (9, 29) mit wenigstens einer Durchgangsbohrung (13, 33) sowie mit wenigstens einer zweiten Drehsicherungsfläche (10, 30) zur drehschlüssigen Verbindung mit der ersten Drehsicherungsfläche (24) versehen ist, wobei das Gegenstück (12, 39) eine unrunde, den Durchtritt des Kopfes (15, 35) vom Grundkörper (1, 21) in einer bestimmten Winkelstellung erlaubende Ausnehmung (14, 37) aufweist und dass am Grundkörper (1, 21) ein rechtwinklig zur Gewindeachse einfederbares Federelement (5, 27) zum Einschnappen in das Gegenstück (12, 39) angeordnet ist, das mit seiner radial entspannten Aussenkontur die Projektion der Ausnehmung (14, 37) wenigstens bereichsweise überragt und auch die drehschlüssige Verbindung herstellt.

2. Befestigungsvorrichtung nach Anspruch 1, dadurch gekennzeichnet, dass das Federelement (5, 27) zumindest teilweise zwischen dem unrunden Kopf (15, 35) des Grundkörpers (1, 21) und dem Zwischenkörper (9, 29) angeordnet ist.

3. Befestigungsvorrichtung nach Anspruch 1 oder 2, dadurch gekennzeichnet, dass das Federelement (5, 27) parallel zur Gewindeachse federbar ist.

4. Befestigungsvorrichtung nach einem der Ansprüche 1 bis 3, dadurch gekennzeichnet, dass das Federelement (5, 27) mit den Drehsicherungsflachen (10, 24, 30) von Grundkörper (1, 21) und Zwischenkörper (9, 29) zusammenwirkende Gegenflächen (6, 7, 25, 26) aufweist.

5. Befestigungsvorrichtung nach Anspruch 4, dadurch gekennzeichnet, dass die Gegenflächen (6, 25, 26) von Stiften und die Drehsicherungsflächen (10, 24, 30) von Durchtrittsöffnungen gebildet sind.

6. Befestigungsvorrichtung nach einem der Ansprüche 1 bis 5, dadurch gekennzeichnet, dass das Gegenstück (12) als Befestigungsschiene ausgebildet ist.

7. Befestigungsvorrichtung nach einem der Ansprüche 1 bis 5, dadurch gekennzeichnet, dass das Gegenstück (39) ein Bauteil ist.

8. Befestigungsvorrichtung nach Anspruch 7, dadurch gekennzeichnet, dass der Zwischenkörper (29) wenigstens einen, als Drehsicherung für das Gegenstück (39) dienenden Vorsprung (38) aufweist, der mit der Ausnehmung (37) des Gegenstückes (39) in Verbindung bringbar ist.

## Claims

1. A fastening device having a main body (1, 21), an intermediate body (9, 29) and a counterpart (12,32), wherein the main body (1, 21) comprises a screw thread (3, 23), an out-of-round head (5, 15) and at least one first rotational securement surface (24), and the intermediate body (9, 29) is provided with at least one through-hole (13, 33) and with at least one second rotational securement surface (10, 30) for a rotationally locked attachment to the first rotational securement surface (24), wherein the counterpart (12, 32) has an out-of-round recess (14, 37) which allows the head (15, 35) of the main body (1, 21) to pass through in a defined angular position, and wherein a spring element (5, 27) which can be elastically deflected at right angles to the axis of the screw thread in order to snap into the counterpart (12, 39) is disposed on the main body (1, 21), the external contour of which spring element which is radially unstressed protrudes at least regionally beyond the projection of the recess (14, 37) and which spring element also produces the rotationally locked attachment.

2. A fastening device according to claim 1, characterised in that the spring element (5, 27) is disposed at least in part between the out-of-round head (15, 35) of the main body (1, 21) and the intermediate body (9, 29).

3. A fastening device according to claim 1 or 2, characterised in that the spring element (5, 27) can behave elastically parallel to the axis of the screw thread.

4. A fastening device according to any one of claims 1 to 3, characterised in that the spring element (5, 27) has counter-faces (6, 7, 25, 26) which cooperate with the rotational securement surfaces (10, 24, 30) of the main body (1, 21) and of the intermediate body (9, 29).

5. A fastening device according to claim 4, characterised in that the counter-faces (6, 25, 26) are formed from pins and the rotational securement surfaces (10, 24, 30) are formed from passageway openings.

6. A fastening device according to any one of claims 1 to 5, characterised in that the counterpart (12) is constructed as a fastening rail.

7. A fastening device according to any one of claims 1 to 5, characterised in that the counterpart (39) is a building component.

8. A fastening device according to claim 7, characterised in that the intermediate body (29) has at least one projection (38) serving as an anti-rotation lock for the counterpart (39), which projection can be brought into connection with the recess (37) of the counterpart (39).

## Revendications

1. Dispositif de fixation comprenant un corps de base (1, 21), un corps intermédiaire (9, 29) et une contre-pièce (12, 32), le corps de base (1, 21) comportant un filetage (3, 23), une tête non ronde (15, 35) ainsi qu'au moins une première surface de blocage en rotation (24), et le corps intermédiaire (9, 29) étant pourvu d'au moins un trou débouchant (13, 33) ainsi que d'au moins une seconde surface de blocage en rotation (10, 30) pour créer une liaison en rotation avec la première surface de blocage en rotation (24), la contre-pièce (12, 39) comportant un évidement non rond (14, 37) permettant à la tête (15, 35) du corps de base (1, 21) de la traverser dans une position angulaire déterminée, et un élément élastique (5, 27) à compression perpendiculaire à l'axe du filetage étant disposé sur le corps de base (1, 21) pour s'emboîter dans la contre-pièce (12, 39), dépassant avec son contour extérieur relâché radialement, au moins en certains endroits, de la projection de l'évidement (14, 37) et créant également la liaison en rotation.

2. Dispositif de fixation selon la revendication 1, caractérisé en ce que l'élément élastique (5, 27) est disposé au moins partiellement entre la tête non ronde (15, 35) du corps de base (1, 21) et le corps intermédiaire (9, 29).

3. Dispositif de fixation selon la revendication 1 ou 2, caractérisé en ce que l'élément élastique (5, 27) est élastique parallèlement à l'axe du filetage.

4. Dispositif de fixation selon l'une des revendications 1 à 3, caractérisé en ce que l'élément élastique (5, 27) comporte des contre-surfaces (6, 7, 25, 26) coopérant avec les surfaces de blocage en rotation (10, 24, 30) du corps de base (1, 21) et du corps intermédiaire (9, 29).

5. Dispositif de fixation selon la revendication 4, caractérisé en ce que les contre-surfaces (6, 25, 26) sont formées par des broches, et les surfaces de blocage en rotation (10, 24, 30) par des ouvertures de passage.

6. Dispositif de fixation selon l'une des revendications 1 à 5, caractérisé en ce que la contre-pièce (12) est conçue sous la forme d'un rail de fixation.

7. Dispositif de fixation selon l'une des revendications 1 à 5, caractérisé en ce que la contre-pièce (39) est un élément de construction.

8. Dispositif de fixation selon la revendication 7, caractérisé en ce que le corps intermédiaire (29) comporte au moins une saillie (38) qui sert à bloquer la contre-pièce (39) en rotation et qui peut s'engager dans l'évidement (37) de la contre-pièce (39).
